# EUROPÄISCHE PATENTSCHRIFT

(11) **EP 4 584 000 B1**
(45) Veröffentlichungstag und Bekanntmachung des Hinweises auf die Patenterteilung: **18.11.2026**
(21) Anmeldenummer: 23764569.2
(22) Anmeldetag: 14.08.2023
(51) Int. Cl.: B01D 29/01, B01D 29/68

(54) **VORRICHTUNG ZUR FILTRATION EINES FLÜSSIGKEITSSTROMS SOWIE VERFAHREN ZUM BETRIEB DER VORRICHTUNG**
DEVICE FOR FILTERING A LIQUID FLOW, AND METHOD FOR OPERATING THE DEVICE
DISPOSITIF DE FILTRATION D'ÉCOULEMENT DE LIQUIDE, ET PROCÉDÉ DE FONCTIONNEMENT DU DISPOSITIF

(30) Priorität: 09.09.2022 DE 102022123044
(43) Veröffentlichungstag der Anmeldung: 16.07.2025
(73) Patentinhaber: TAPROGGE GmbH, 58300 Wetter (DE)
(72) Erfinder: KELLER, Guido, 58093 Hagen (DE)
(74) Vertreter: Kalkoff & Partner Patentanwälte mbB
(86) Internationale Anmeldenummer: PCT/EP2023/072414
(87) Internationale Veröffentlichungsnummer: WO 2024/052058

(56) Entgegenhaltungen:
- CN-A- 112 097 005
- DE-A1- 3 347 064
- DE-A1- 3 833 807
- DE-C1- 4 021 085

## Beschreibung

Die Erfindung betrifft eine Vorrichtung zur Filtration eines Flüssigkeitsstroms sowie ein Verfahren zum Betrieb einer Vorrichtung zur Filtration eines Flüssigkeitsstroms.

Vorrichtungen zur Filtration eines Flüssigkeitsstroms werden dazu eingesetzt, um in einem Flüssigkeitsstrom befindliche Partikel zum Schutz vor Verstopfungen und/oder Verblockungen von der Vorrichtung nachgeschalteten Anlagen, beispielsweise Kondensatoren oder Wärmeüberträgern aus dem Flüssigkeitsstrom herauszufiltern.

Hierzu weisen bekannte Vorrichtungen ein Rohrelement zum Führen eines Flüssigkeitsstroms, beispielsweise eines Kühlwasserstroms, sowie eine in dem Rohrelement angeordnete, bewegliche oder feststehende Filtereinheit zum Trennen und/oder Separieren von den Flüssigkeitsstrom verunreinigenden Partikeln, bspw. Dreck- und/oder Schmutzpartikel sowie Rückstände, von dem Flüssigkeitsstrom auf.

Aufgrund einem mit fortschreitender Betriebsdauer eintretenden Blockieren und/oder Zusetzen der Filtereinheit durch die separierten Partikel weisen bekannte Vorrichtungen zur Filtration eines Flüssigkeitsstroms einen an der Filtereinheit angeordneten rotierbaren Reinigungsrotor auf. Zur Reinigung einer zugesetzten und/oder blockierten Filtereinheit wird der Reinigungsrotor rotiert, sodass im Bereich des Reinigungsrotors eine lokale Strömungsumkehr der Flüssigkeit bewirkt wird und die an der Filtereinheit angeordneten Partikel durch eine geringe Menge der Flüssigkeit abtransportiert werden. Beispielsweise offenbart die DE 3833 807 A1 eine Vorrichtung zum Abscheiden von Feststoffen aus Kühlwasser.

Die DE 40 21 085 C1 offenbart einen Rückspülfilter für grobe Verunreinigungen, insbesondere im Kühlwasser von Wärmetauschern mit einem rotationssymmetrischen Siebelement, das koaxial innerhalb der Kühlwasserleitung und über deren gesamten Querschnitt angeordnet ist. Das Sieb ist konvex als Kugelkalotte ausgebildet und wird vom einem kreisbogenförmigen Rückspülrotor überstrichen, wobei eine entlang eines Meridianbogens des Filters verlaufende Sammel- und Ablaufrinne eingelassen ist.

Die DE 33 47 064 A1 offenbart eine Vorrichtung für die mechanische Reinigung eines in einer Kühlwasserleitung geführten Kühlwasserstromes von Kraftwerkskondensatoren mit einem zylindrischen Gehäuse, einer Siebvorrichtung mit von dem zu reinigenden Kühlwasser durchströmter Siebfläche, einer um die Zylinderachse rotierbaren Absaugeinrichtung mit angeschlossener Absaugleitung für eine partielle Rückspülung der Siebfläche, einem Rohwassereintritt am Gehäuse und einem Reinwasseraustritt. Die rotierbare Absaugeinrichtung ist mit einem mechanischen Antrieb versehen, und die axial an die Absaugeinrichtung angeschlossene, feststehende Absaugleitung ist über eine Gehäuseausnehmung nach außen geführt. Das Gehäuse ist als Rohrschuß ausgeführt, dessen Anfang den Rohwassereintritt bildet. Die Siebvorrichtung weist eine Siebfläche auf, die zumindest der Querschnittsfläche der Kühlwasserleitung entspricht und die den Reinwasseraustritt bildet. Die Absaugleitung ist über einen Krümmer, in den die Absaugeinrichtung mit einem Stutzen einmündet, radial zu der in dem Rohrschuß angeordneten Gehäuseausnehmung geführt.

Bekannte Vorrichtungen zur Filtration eines Flüssigkeitsstroms weisen den Nachteil auf, dass der Reinigungsrotor und eine den Reinigungsrotor antreibende Antriebseinheit aufgrund sehr hoher mechanischer Belastungen, z.B. durch unerwünschte strömungsinduzierte Kräfte und Momente, im Extremfall ungeplant und unvorhersehbar ausfallen, sodass die Vorrichtungen wartungsintensiv sind.

Es kann als Aufgabe angesehen werden, eine wartungsarme Vorrichtung sowie ein Verfahren zur Filtration eines Flüssigkeitsstroms bereitzustellen, die auf einfache und zuverlässige Weise die Filtration eines Flüssigkeitsstroms, insbesondere im Kraftwerksbereich oder in großindustriellen Flüssigkeitssystemen, ermöglicht.

Die Erfindung wird gelöst durch eine Vorrichtung gemäß Anspruch 1 sowie ein Verfahren gemäß Anspruch 12. Abhängige Ansprüche beziehen sich auf vorteilhafte Ausführungsformen der Erfindung.

Erfindungsgemäß weist die Vorrichtung zur Filtration eines Flüssigkeitsstroms ein Rohrelement zur Führung des Flüssigkeitsstroms und eine in dem Rohrelement ortsfest angeordnete Filtereinheit zum Filtern des Flüssigkeitsstroms auf. Weiter weist die Vorrichtung erfindungsgemäß einen an der Filtereinheit angeordneten und um eine in Strömungsrichtung des Flüssigkeitsstroms angeordnete Drehachse rotierbaren Reinigungsrotor sowie eine Antriebseinheit mit einem Antrieb zur Erzeugung eines Antriebsmoments und einer Anordnung zur Übertragung des Antriebsmoments auf den Reinigungsrotor auf.

Die Erfinder haben erkannt, dass eine erfindungsgemäß in Kraftflussrichtung des Antriebsmoments in dem Rohrelement angeordnete Blockiereinheit, die zwischen einer den Reinigungsrotor festlegenden Blockierstellung und einer den Reinigungsrotor zur Rotation um die Drehachse freigebenden Freigabestellung verstellbar ist, sowohl den Reinigungsrotor als auch die Antriebseinheit vor Belastungen schützt, die durch unerwünschte strömungsinduzierte Kräfte und Momente sowie durch diese induzierte Vibrationen und eine gegebenenfalls erzeugte unerwünschte Rotation des Reinigungsrotors resultieren. Indem der Reinigungsrotor und/oder die Antriebseinheit mittels der in dem Rohrelement angeordneten Blockiereinheit festgehalten wird, werden strömungsinduzierte Kräfte und Momente und somit auch eine außerplanmäßige Rotation des Reinigungsrotors und/oder der Antriebseinheit verhindert, sodass eine durch unvorhersehbare, strömungsinduzierte Belastungen bedingte Abnutzung sowie schlimmstenfalls Zerstörung des Reinigungsrotors und/oder der Antriebseinheit verhindert werden. Dadurch dass die Blockiereinheit in dem Rohrelement angeordnet ist, können der Reinigungsrotor und/oder die Antriebseinheit zuverlässig und effektiv geschützt werden. Hierdurch kann eine wartungsarme Vorrichtung zur Filtration des Flüssigkeitsstroms ermöglicht werden, die zugleich mit der Filtereinheit auf eine einfache und zuverlässige Weise die Filtration des Flüssigkeitsstroms gewährleistet.

Unter einer Vorrichtung zur Filtration eines Flüssigkeitsstroms wird vorzugsweise eine Vorrichtung verstanden, die derart ausgebildet ist, dass in dem Flüssigkeitsstrom enthaltene Partikel von dem Flüssigkeitsstrom getrennt und/oder separiert und/oder aus dem Flüssigkeitsstrom abgeleitet und/oder abgetragen werden.

Das Rohrelement ist derart ausgebildet, dass der Flüssigkeitsstrom innerhalb des Rohrelements geführt und/oder geleitet wird. Das Rohrelement weist eine Rohrwand mit einem sich in Strömungsrichtung des Flüssigkeitsstroms erstreckenden, beispielsweise kreisförmigen, ellipsenförmigen oder polygonförmigen Querschnitt auf. Bevorzugt ist das Rohrelement im Bereich der Filtereinheit und des Reinigungsrotors geradlinig ausgebildet, sodass sich eine Längsachse des Rohrelements parallel zu der Strömungsrichtung des Flüssigkeitsstroms erstreckt. Ferner weist das Rohrelement einen durch eine Innenwand begrenzten Innenbereich auf, innerhalb dem der Flüssigkeitsstrom geleitet wird.

Die Filtereinheit ist derart ausgebildet, dass in dem Flüssigkeitsstrom vorhandene Partikel, beispielsweise Dreck- und/oder Schmutzpartikel, bei einem Durchströmen des Flüssigkeitsstroms durch die Filtereinheit von dem Flüssigkeitsstrom getrennt und/oder separiert werden. Die Filtereinheit ist vorzugsweise im Winkel, bevorzugt senkrecht zur Strömungsrichtung des Flüssigkeitsstroms ortsfest in dem Rohrelement angeordnet. Unter ortsfest wird hierbei verstanden, dass die Filtereinheit in axialer und/oder in radialer Richtung des Rohrelements festgelegt ist. Besonders bevorzugt ist die Filtereinheit derart abgedichtet in dem Rohrelement angeordnet, dass ein durch die Innenwand des Rohrelements begrenzter Innenquerschnitt des Rohrelements vollständig von der Filtereinheit verdeckt ist. Bevorzugt weist die Filtereinheit eine, beispielsweise polygonförmige, ellipsenförmige oder kreisförmige Filterfläche zum Filtern des Flüssigkeitsstroms auf.

Die Filterfläche der Filtereinheit ist bevorzugt an einem oder mehreren Filterelementen der Filtereinheit angeordnet. Vorzugsweise ist das Filterelement aus einem Metallwerkstoff, z.B. Edelstahl, einem Kunststoffwerkstoff oder einem Verbundwerkstoff gebildet. Je nach Art und Gestaltung und/oder Anordnung der Filterelemente ist die Filterfläche der Filtereinheit beispielsweise kegelförmig ausgebildet. Die Filtereinheit, insbesondere das Filterelement, ist vorzugsweise als Sieb, beispielsweise als Lochblech oder als Gitter ausgebildet, sodass die Partikel an der Filterfläche von dem durch die Filtereinheit strömenden Flüssigkeitsstrom getrennt und/oder separiert werden.

Der Reinigungsrotor ist derart ausgebildet und/oder an der Filtereinheit angeordnet, dass eine lokale Umkehr der Strömungsrichtung des Flüssigkeitsstroms im Bereich des Reinigungsrotors eine rückwärtige Durchströmung der Filtereinheit, bevorzugt der Filterfläche, von einer geringen Menge der Flüssigkeit bewirkt und ein Abtransport der Partikel zur druckentlasteten Reinigung der Filtereinheit ausgelöst wird. Bevorzugt ist der Reinigungsrotor an einem an dem Rohrelement angeordneten Ableitelement zum Abtransportieren und/oder Absaugen der mittels der Filtereinheit von dem Flüssigkeitsstrom getrennten Partikel angeordnet. Das Ableitelement ist zur Absaugung, d.h. zur lokalen Umkehr der Strömungsrichtung des Flüssigkeitsstroms im Bereich des Reinigungsrotors, ausgebildet. Bevorzugt ist das Ableitelement in dem Rohrelement angeordnet. Beispielsweise ist das Ableitelement als Leitung oder Rohr ausgebildet.

Die Drehachse des Reinigungsrotors ist in Strömungsrichtung des Flüssigkeitsstroms und bevorzugt in der Längsachse des Rohrelements angeordnet. Der Reinigungsrotor erstreckt sich in dem Rohrelement in radialer Richtung zur Drehachse. Vorzugsweise weist der Reinigungsrotor eine im Winkel, bevorzugt senkrecht zur Drehachse und/oder zur Strömungsrichtung des Flüssigkeitsstroms angeordnete teilkreisförmige oder polygonförmige Kontur auf. Beispielsweise weist der Reinigungsrotor für den Fall einer kreisförmig ausgebildeten Filterfläche eine als Kreissektor ausgebildete Kontur auf oder für den Fall einer kegelförmig ausgebildeten Filterfläche zum Beispiel eine rechteckig ausgebildete Kontur auf. Durch die Rotation des Reinigungsrotors um die Drehachse wird die Filterfläche im Wesentlichen, bevorzugt vollständig von dem Reinigungsrotor abgedeckt, sodass die an der Filtereinheit, insbesondere der Filterfläche angeordneten Partikel mittels des Reinigungsrotors von der Filtereinheit abgesaugt werden können.

Der Reinigungsrotor ist durch die Antriebseinheit antreibbar. Der Antrieb der Antriebseinheit ist erfindungsgemäß als hydraulischer oder als elektrischer Antrieb ausgebildet. Die Anordnung ist derart ausgebildet, dass das durch den Antrieb erzeugte Antriebsmoment auf den Reinigungsrotor übertragen wird. Die Rotation, also die Drehbewegung des Reinigungsrotors um die Drehachse, erfolgt durch ein Einschalten des Antriebs und die Übertragung des Antriebsmoment durch die Anordnung auf den Reinigungsrotor.

Unter der Blockiereinheit wird bevorzugt eine Vorrichtung oder Einheit verstanden, die derart ausgebildet ist, dass der Reinigungsrotor, die Anordnung und/oder die Antriebseinheit gegen eine unerwünschte Rotation geschützt sind, und/oder die derart ausgebildet ist, dass der Rotor gegen ein unerwünschtes Verdrehen um die Drehachse gesichert ist und am Rotor durch den Flüssigkeitsstrom eingeleitete Kräfte aufgenommen werden. Die Blockiereinheit ist zwischen der Freigabestellung und der Blockierstellung verstellbar. Weiter ist die Blockiereinheit derart ausgebildet, dass in der Blockierstellung eine Rotation des Reinigungsrotors um die Drehachse verhindert wird. In der Freigabestellung ist der Reinigungsrotor zur Rotation um die Drehachse und somit bevorzugt zur Reinigung der Filtereinheit freigegeben. Bevorzugt ist die Blockiereinheit derart in dem Rohrelement angeordnet, dass der Reinigungsrotor und/oder die Antriebseinheit und/oder die Anordnung und/oder der Antrieb in der Blockierstellung festgelegt sind.

Die Erfindung betrifft weiter ein Verfahren zum Betrieb einer Vorrichtung zur Filtration eines Flüssigkeitsstroms, insbesondere einer im Rahmen der Patentenanmeldung beschriebenen Vorrichtung. Ein in dem Rohrelement geführter Flüssigkeitsstrom wird mittels der in dem Rohrelement angeordneten Filtereinheit zum Trennen von Partikeln von dem Flüssigkeitsstrom gefiltert. Der an der Filtereinheit angeordnete und um die in Strömungsrichtung des Flüssigkeitsstroms angeordnete Drehachse rotierbare Reinigungsrotor wird mittels der in der Blockierstellung und in Kraftflussrichtung des Antriebsmoments des Reinigungsmotors in dem Rohrelement angeordneten Blockiereinheit festgehalten.

Zum Einleiten einer Reinigungsphase wird die Blockiereinheit von der Blockierstellung in die den Reinigungsrotor freigebende Freigabestellung verstellt und der Reinigungsrotor mittels der den hydraulischen oder elektrischen Antrieb zur Erzeugung des Antriebsmoments und die Anordnung zur Übertragung des Antriebsmoments auf den Reinigungsrotor aufweisenden Antriebseinheit zur Entfernung der von dem Flüssigkeitsstrom getrennten Partikel rotiert. Bevorzugt wird in der Reinigungsphase, beispielsweise vor oder nach der Verstellung der Blockiereinheit, die Absaugung mittels des Ableitelements eingeschaltet.

Die Vorrichtung zur Filtration eines Flüssigkeitsstroms wird bevorzugt in einem großindustriellen Flüssigkeitssystem und/oder im Kraftwerksbereich eingesetzt. Hierbei wird unter großindustriell und/oder im Kraftwerksbereich verstanden, dass die Vorrichtung, insbesondere das Rohrelement, die Filtereinheit und/oder der Reinigungsrotor bevorzugt derart ausgebildet sind, dass ein Flüssigkeitsstrom mit einem Volumen von ca. 500 - 180.000 m³/h, bevorzugt 1000 - 120.000 m³/h, besonders bevorzugt 1500- 110.000 m³/h durchleitbar und/oder filterbar ist.

Der Antrieb ist beispielsweise in dem Flüssigkeitsstrom oder bevorzugt außerhalb des Flüssigkeitsstroms angeordnet. Die Anordnung ist in Abhängigkeit von der Anordnung des Antriebs an dem Rohrelement ausgebildet. Beispielsweise weist die Anordnung für den Fall eines in dem Flüssigkeitsstroms angeordneten Antriebs zur Übertragung des Antriebsmoments von dem Antrieb auf den Reinigungsrotor eine mit dem Reinigungsrotor verbundene Antriebswelle auf.

Nach einer vorteilhaften Weiterbildung der Erfindung ist jedoch vorgesehen, dass die Anordnung ein Getriebe und eine Rotorwelle zur Übertragung des Antriebsmoments auf den Reinigungsrotor aufweist, wobei die Blockiereinheit in Kraftflussrichtung des Antriebsmoments nach dem Getriebe angeordnet ist. Das Getriebe ist für den Fall eines außerhalb des Flüssigkeitsstroms an dem Rohrelement angeordneten Antriebs bevorzugt als Umlenkgetriebe ausgebildet. Unter einem Umlenkgetriebe wird hierbei ein Getriebe verstanden, bei dem Antrieb und Abtrieb in einem Winkel, beispielsweise senkrecht zueinander angeordnet sind. Die Rotorwelle ist mit dem Reinigungsrotor verbunden und derart an der Filtereinheit gelagert, dass der Reinigungsrotor um die Drehachse rotierbar ist. Die Rotorwelle ist derart mit dem Getriebe verbunden, dass das Antriebsmoment von dem Getriebe auf den Reinigungsrotor übertragen wird. Indem die Anordnung auf vorteilhafte Weise ein Getriebe und eine Rotorwelle aufweist, kann das Antriebsmoment unabhängig von der Anordnung des Antriebs zuverlässig auf den Reinigungsrotor übertragen werden. Dadurch dass die Blockiereinheit in Kraftflussrichtung des Antriebsmoments nach dem Getriebe angeordnet ist, wird das Getriebe der Anordnung zuverlässig gegen mechanische Überlastungen durch eine unerwünschte Rotation des Reinigungsrotors geschützt. Hierdurch kann einer mechanischen Überlastung sowie einem übermäßigen Verschleiß der Antriebseinheit, bspw. an Verbindungen im Getriebe und/oder zwischen dem Getriebe und dem Antrieb und/oder zwischen dem Getriebe und der Rotorwelle, bspw. an form- und/oder kraftschlüssige Verbindungen, z.B. Verzahnungen oder Passfederverbindungen entgegengewirkt werden.

Die Blockiereinheit ist beispielsweise in Kraftflussrichtung des Antriebsmoments zwischen dem Getriebe und der Rotorwelle angeordnet. Nach einer vorteilhaften Ausgestaltung der Erfindung ist jedoch vorgesehen, dass die Blockiereinheit an der Rotorwelle angeordnet ist. Hierbei wird unter an der Rotorwelle verstanden, dass die Blockiereinheit unmittelbar an der Rotorwelle und/oder an einer das Getriebe mit der Rotorwelle verbindenden Zwischenwelle angeordnet ist. Die Rotorwelle ist bevorzugt einteilig oder mehrteilig ausgebildet. Die Zwischenwelle ist beispielsweise als separates Bauteil oder bevorzugt als Teil der mehrteilig ausgebildeten Rotorwelle ausgebildet. Das Antriebsmoment wird durch die Zwischenwelle von dem Getriebe auf die Rotorwelle übertragen. Die Rotorwelle ist bevorzugt in einer an der Filtereinheit angeordneten Lagereinheit drehbar gelagert. Hierzu weist die Lagereinheit vorzugsweise mindestens zwei Lagerelemente auf, beispielsweise Gleit- oder bevorzugt Wälzlager. Indem die Blockiereinheit an der Rotorwelle angeordnet ist, kann auf vorteilhafte Weise gewährleistet werden, dass neben der Rotorwelle auch die dem Reinigungsrotor vorgeschaltete Anordnung sowie die Antriebseinheit vollständig geschützt und frei von Kräften und Momenten aus der Strömung sind. Hiermit können Relativbewegungen zwischen Dichtelementen der Lagereinheit und der Rotorwelle vorgebeugt und somit dem Verschleiß und der Abnutzung der Dichtelemente, z.B. O-Ringe, Wellendichtringe und/oder Radialwellendichtringe, entgegengewirkt werden.

Nach einer vorteilhaften Weiterbildung der Erfindung ist vorgesehen, dass die Blockiereinheit in Strömungsrichtung des Flüssigkeitsstroms im Wesentlichen in der Flucht der Lagereinheit der Rotorwelle angeordnet ist. Hierbei wird unter im Wesentlichen in der Flucht verstanden, dass die Blockiereinheit in Strömungsrichtung hinter der Lagereinheit der Rotorwelle angeordnet ist. Bevorzugt sind die Lagereinheit und die Blockiereinheit koaxial zu der Drehachse angeordnet. Vorzugsweise weist die Blockiereinheit senkrecht zu der Strömungsrichtung des Flüssigkeitsstroms und/oder senkrecht zu der Drehachse des Reinigungsrotors einen Durchmesser auf, der ein Verhältnis von maximal 1,2:1, bevorzugt maximal 1,1:1 besonders bevorzugt maximal 1:1 zu einem Durchmesser der Lagereinheit aufweist. Durch die in der Flucht der Lagereinheit angeordnete Blockiereinheit wird eine durch Strömungswiderstände hervorgerufene Beeinträchtigung des Flüssigkeitsstroms auf vorteilhafter Weise reduziert, wodurch einem unerwünschten Druckaufbau im Bereich der Blockiereinheit entgegengewirkt werden kann.

Nach einer vorteilhaften Weiterbildung der Erfindung ist vorgesehen, dass die Blockiereinheit derart ausgebildet ist, dass der Reinigungsrotor in der Blockierstellung formschlüssig und/oder reibschlüssig festgelegt wird, wodurch der Reinigungsrotor zuverlässig durch die in der Blockierstellung angeordnete Blockiereinheit festlegbar ist. Unter festlegen des Reinigungsrotors wird hierbei verstanden, dass der Reinigungsrotor direkt und/oder mittelbar, beispielsweise an der Rotorwelle und/oder der Antriebseinheit, gegen eine unerwünschte Rotation um die Drehachse festgelegt ist.

Nach einer vorteilhaften Ausgestaltung der Erfindung ist vorgesehen, dass die Blockiereinheit intern in Richtung auf die Blockierstellung vorgespannt ist. Unter vorgespannt wird hierbei verstanden, dass eine äußere Kraft, z.B. ein Zug- oder Druckkraft, zur Verstellung der Blockiereinheit von der Blockierstellung in die Freigabestellung erforderlich ist, während die Blockiereinheit ohne äußere Einwirkung in der Blockierstellung bleibt. Unter intern wird verstanden, dass die Blockiereinheit derart ausgebildet ist, dass die Vorspannung in Richtung auf die Blockierstellung durch die Blockiereinheit selbst bewirkt wird. Beispielsweise kann die Vorspannung der Blockiereinheit durch eine Federspannung erzeugt werden. Dadurch dass die Blockiereinheit in Richtung auf die Blockierstellung vorgespannt ist, kann auf vorteilhafte Weise gewährleistet werden, dass der Reinigungsrotor außerhalb der Reinigungsphasen automatisch gesichert ist, ohne dass hierzu eine dauernde Ansteuerung der Blockiereinheit notwendig ist. Hierdurch kann das Risiko eines unerwünschten Verdrehens des Reinigungsrotors weiter reduziert werden.

Gemäß einer vorteilhaften Ausführungsform der Erfindung ist vorgesehen, dass die Blockiereinheit ein an dem Rohrelement angeordnetes Verstellelement aufweist, das in der Blockierstellung mit einem an dem Reinigungsrotor angeordneten Halteabschnitt in Wirkverbindung steht. Das Verstellelement ist bspw. im Innenbereich des Rohrelements oder die Rohrwand durchdringend abgedichtet an dem Rohrelement angeordnet. Der Halteabschnitt ist bevorzugt in Umfangsrichtung zu der Drehachse des Reinigungsrotors an dem Reinigungsrotor angeordnet. Das Verstellelement und/oder der Halteabschnitt sind bevorzugt derart ausgebildet, dass der Reinigungsrotor und das Verstellelement in der Blockierstellung einen Formschluss in Umfangsrichtung zu der Drehachse des Reinigungsrotors bilden. Das Verstellelement und der Halteabschnitt weisen bevorzugt jeweils in der Blockierstellung miteinander in Eingriff stehende Formabschnitte, beispielsweise alternierend angeordnete Erhebungen und Vertiefungen, auf. Ferner ist das Verstellelement zwischen einer der Freigabestellung zugeordneten Freigabeposition und einer der Blockierstellung zugeordneten Blockierposition verstellbar. Das Verstellelement und der Halteabschnitt ermöglichen auf einfache Weise eine zuverlässige Festlegung des Reinigungsrotors in der Blockierstellung. Indem die Blockiereinheit das Verstellelement und den an dem Reinigungsrotor angeordneten Halteabschnitt aufweist, können die unerwünschten strömungsinduzierten Kräfte und Momente auf vorteilhafte Weise direkt am Ort der Erstehung, d.h. im Bereich zwischen dem Reinigungsrotor und der Innenwand des Rohrelements aufgefangen und verhindert werden.

Nach einer vorteilhaften Weiterbildung der Erfindung ist vorgesehen, dass die Blockiereinheit als hydraulisch betätigte Bremse ausgebildet ist. Die als hydraulisch betätigte Bremse ausgebildete Blockiereinheit ist bevorzugt an der Rotorwelle oder der Zwischenwelle angeordnet. Besonders bevorzugt ist die hydraulisch betätigte Bremse die Rotor- oder Zwischenwelle umgreifend und/oder umschließend angeordnet. Die hydraulisch betätigte Bremse ist dazu ausgebildet, eine Rotation der Rotorwelle durch ein Festhalten der Rotor- oder Zwischenwelle in der Blockierstellung zu Verhindern. Hierzu ist ein Bremsmoment größer als ein aus der Strömung resultierendes Drehmoment des Reinigungsrotors. Bevorzugt ist die hydraulisch betätigte Bremse als Lamellenbremse ausgebildet. Zur Vorspannung in Richtung auf die Blockierstellung und/oder zum Zusammenpressen der Lamellen weist die Lamellenbremse bevorzugt vorgespannte Federelemente, z.B. Federpakete auf.

Für die Einleitung der Reinigungsphase, d.h. vorzugsweise eine Verstellung von der Blockierstellung in die Freigabestellung, werden die Lamellen der bevorzugt als Lamellenbremse ausgebildeten Blockiereinheit gelöst und die Rotorwelle zur Rotation um die Drehachse freigegeben. Bevorzugt werden die Lamellen durch einen hydraulisch erzeugten Druck gelöst. Nach einer vorteilhaften Ausgestaltung der Erfindung ist daher vorgesehen, dass die Vorrichtung eine Druckeinheit zur Bereitstellung von hydraulischem Druck zur Verstellung der hydraulisch betätigten Bremse zwischen der Blockierstellung und der Freigabestellung aufweist. Die Druckeinheit ist bevorzugt als Vorratsgefäß für eine Flüssigkeit, z.B. Öl ausgebildet. Zum Lösen der als hydraulisch betätigte Bremse ausgebildeten Blockiereinheit wird die Bremse mit dem mittels des von der Druckeinheit bereitgestellten, bevorzugt ölhydraulischen Druck beaufschlagt und für den Fall einer Lamellenbremse beispielsweise die vorgespannten Federpakte gelöst. Bevorzugt ist die Druckeinheit außerhalb der Filtereinheit, besonders bevorzugt außerhalb des Rohrelements angeordnet. Durch die Druckeinheit und das Lösen der hydraulisch betätigten Bremse mittels hydraulisch erzeugten Drucks kann auf besonders einfache und zuverlässige Weise eine Verstellung zwischen der Blockierstellung und der Freigabestellung ermöglicht werden.

Nach einer vorteilhaften Weiterbildung der Erfindung ist vorgesehen, dass die Vorrichtung eine mit mindestens einem Sensorelement verbundene Steuereinheit zur Steuerung der Antriebseinheit aufweist. Die Steuereinheit ist vorzugsweise als programmierbare Einheit, z.B. als Computer, als SPS oder in Form einer externen und/oder übergeordneten Steuerung, gebildet. Bevorzugt weist die Vorrichtung wenigstens ein, besonders bevorzugt mehrere Sensorelemente zur Erfassung von Sensorsignalen auf, wie beispielsweise des Drucks vor und/oder hinter der Filtereinheit -bezogen auf die Strömungsrichtung des Flüssigkeitsstroms- und/oder den hydraulischen Druck zum Lösen der als hydraulisch betätigte Bremse ausgebildeten Blockiereinheit. Das oder die Sensorelemente stehen mit der Steuereinheit zur Weiterleitung der erfassten Daten in Verbindung. Die Sensorelemente sind beispielsweise vor und/oder nach der Filtereinheit an und/oder in dem Rohrelement und/oder an der Blockiereinheit angeordnet. Die Steuereinheit steht bevorzugt wenigstens mit einem Steuermittel zum Aktivieren und Deaktivieren des Antriebs in Verbindung. Bevorzugt ist die Steuereinheit derart ausgebildet, dass sie in Abhängigkeit von Sensorsignalen ein vorgebbares Programm ausführt. Das vorgebbare Programm weist bevorzugt Einstellungsmöglichkeiten für einen Grenzwert des Druckes der Flüssigkeitsströmung vor und/oder nach der Filtereinheit auf. Ferner ist die Steuereinheit zur Weitergabe der erfassten Daten an einen besonders bevorzugt außerhalb des Rohrelements angeordneten Empfänger gebildet.

Das Reinigen der Filtereinheit mittels des Reinigungsrotors, bzw. die Reinigungsphase, kann grundsätzlich in beliebiger Weise und zu einem beliebigen Zeitpunkt sowie über eine beliebige Dauer erfolgen. Bevorzugt wird das Reinigen jedoch periodisch und/oder in Abhängigkeit eines vorgebbaren Grenzwerts und/oder für eine festgelegte Dauer und/oder nach einem bzw. für ein festgelegtes Zeitintervall gesteuert. Besonders bevorzugt wird als vorgebbarer Grenzwert ein maximaler Druck vor und/oder nach der Filtereinheit eingestellt. Der Druck vor und/oder nach der Filtereinheit wird bevorzugt mittels der vorstehend beschriebenen Sensorelemente erfasst und besonders bevorzugt kontinuierlich überwacht. Für den Druck vor und/oder nach der Filtereinheit können ein und/oder zwei verschiedene vorgebbare Grenzwerte vorgesehen sein. Der Reinigungsrotor wird beispielsweise beim Überschreiten eines ersten Grenzwerts des Druckes vor der Filtereinheit oder beim Unterschreiten eines zweiten Grenzwerts des Druckes nach der Filtereinheit aktiviert. Ferner kann der Druck vor und nach der Filtereinheit erfasst und eine Druckdifferenz ermittelt werden, wobei als Grenzwert vorzugsweise eine maximale Druckdifferenz vorgebbar ist. Bevorzugt weist die Vorrichtung ein als Differenzdrucksensor ausgebildetes Sensorelement auf. Alternativ und/oder zusätzlich kann auch eine andere Messung des Flüssigkeitsstroms, beispielsweise der Fließgeschwindigkeit erfolgen. Für den Fall einer am Reinigungsrotor angeordneten Blockiereinheit mit einem Halteabschnitt weist die Vorrichtung bevorzugt ein als Positionssensor zur Erfassung der Winkelstellung des Reinigungsrotors ausgebildetes Sensorelement auf.

Nachfolgend wird ein Ausführungsbeispiel der Erfindung anhand von Zeichnungen beschrieben. Dabei zeigen:
- Fig.1a: in schematischer Ansicht einen Längsschnitt einer Vorrichtung zur Filtration eines Flüssigkeitsstroms;
- Fig.1b: eine schematische Detailansicht B einer Blockiereinheit der Vorrichtung aus Fig.1a;
- Fig.1c: einen schematischen Querschnitt entlang der Linie A-A der in Fig. 1a dargestellten Vorrichtung;
- Fig. 2a: in schematischer Ansicht einen Längsschnitt einer zweiten Ausführungsform der Vorrichtung zur Filtration eines Flüssigkeitsstroms;
- Fig.2b: einen schematischen Querschnitt entlang der Linie C-C der in Fig. 2a dargestellten Vorrichtung und
- Fig.2c: eine schematische Detailansicht D einer Blockiereinheit der in Fig. 2a und 2b dargestellten Vorrichtung.

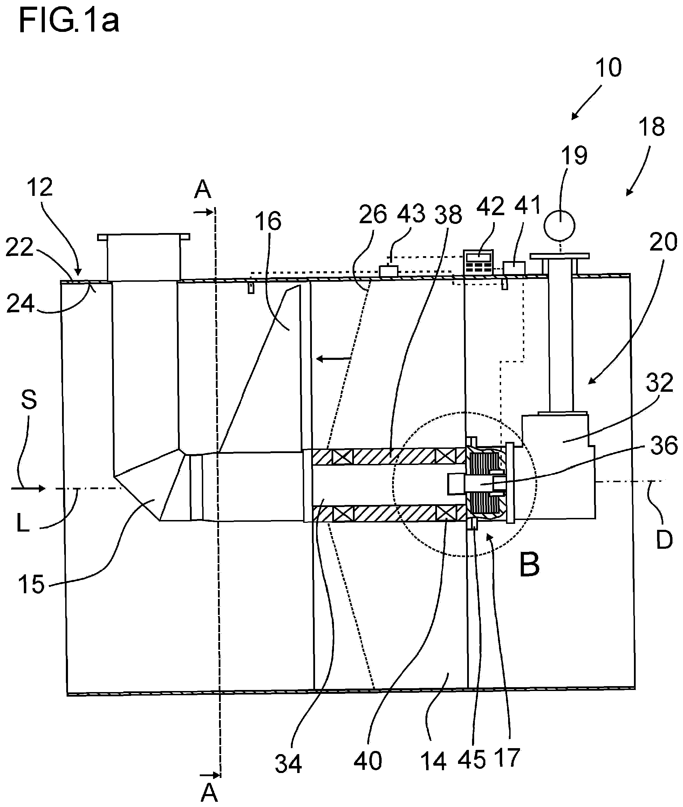

In Fig.1a ist in schematischer Ansicht ein Längsschnitt einer Vorrichtung 10 zur Filtration eines Flüssigkeitsstroms dargestellt. Die Vorrichtung 10 weist ein Rohrelement 12 zur Führung des Flüssigkeitsstroms und eine in dem Rohrelement 12 ortsfest angeordnete Filtereinheit 14 auf. An der Filtereinheit 14 ist ein um eine in Strömungsrichtung S des Flüssigkeitsstroms angeordnete Drehachse D rotierbarer Reinigungsrotor 16 angeordnet. Ferner weist die Vorrichtung 10 eine Antriebseinheit 18 mit einem Antrieb 19 zur Erzeugung eines Antriebsmoments und einer Anordnung 20 zur Übertragung des Antriebsmoments auf den Reinigungsrotor 16 auf. Darüber hinaus weist die Vorrichtung 10 eine in Kraftflussrichtung des Antriebsmoments in dem Rohrelement 12 angeordnete Blockiereinheit 17 auf.

Das Rohrelement 12 weist eine Rohrwand 22 mit einem sich in Strömungsrichtung S des Flüssigkeitsstroms erstreckenden, kreisförmigen Querschnitt QR auf. Weiter ist das Rohrelement 12 im Bereich der Filtereinheit 14 geradlinig ausgebildet, sodass sich eine Längsachse L des Rohrelements parallel zur der Strömungsrichtung S des Flüssigkeitsstroms und in der Drehachse D des Reinigungsrotors erstreckt. Der Flüssigkeitsstrom wird zwischen einer Innenwand 24 des Rohrelements 12 geleitet.

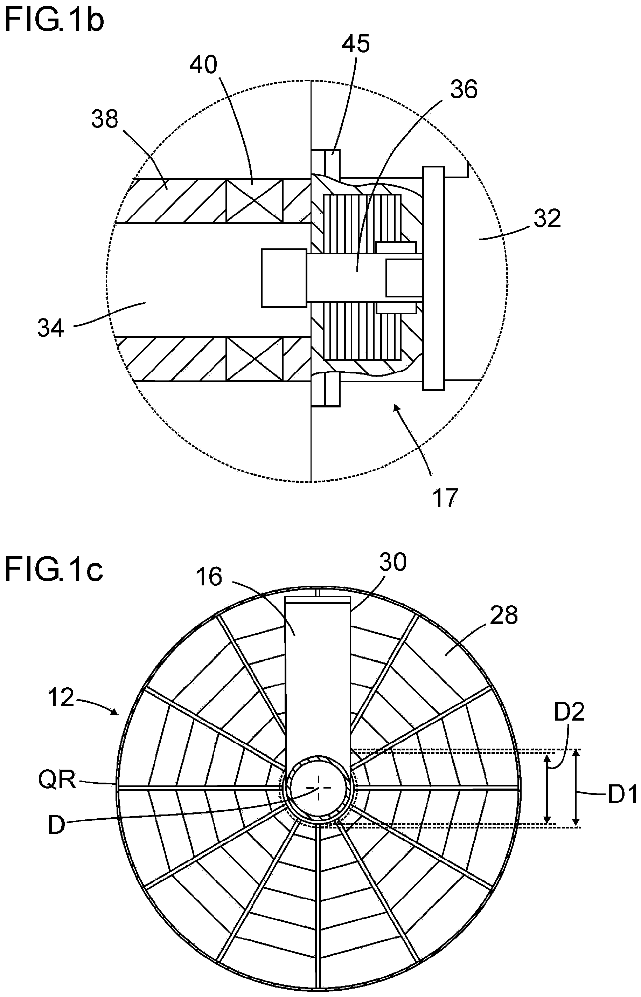

Die Filtereinheit 14 ist senkrecht zur Strömungsrichtung S des Flüssigkeitsstroms ortsfest in dem Rohrelement 12 angeordnet, d.h. dass die Filtereinheit 14 in axialer und radialer Richtung der Längsachse L des Rohrelements 12 festgelegt ist. Ferner weist die Filtereinheit 14 eine kegelförmig ausgebildete Filterfläche 26 zum Filtern des Flüssigkeitsstroms auf. Wie in Fig. 1c dargestellt ist die Filterfläche 26 an mehreren Filterelementen 28 angeordnet. An der Filterfläche 26 sind in dem Flüssigkeitsstrom vorhandene Partikel, beispielsweise Dreck- und/oder Schmutzpartikel, bei einem Durchströmen des Flüssigkeitsstroms durch die Filtereinheit 14 von dem Flüssigkeitsstrom trennbar.

Der Reinigungsrotor 16 erstreckt sich in dem Rohrelement 12 in radialer Richtung zur Drehachse D und weist eine senkrecht zur Drehachse D und zur Strömungsrichtung S des Flüssigkeitsstroms angeordnete, rechteckig ausgebildete Kontur 30 auf. Der Reinigungsrotor 16 ist mittig in dem Rohrelement 12 an der Filtereinheit 14 angeordnet. Die Vorrichtung 10 weist ein an dem Reinigungsrotor 16 angeordnetes Ableitelement 15 zum Absaugen und Abtransportieren der mittels der Filtereinheit 14 und der Filterfläche 26 von dem Flüssigkeitsstrom getrennten Partikel auf. Das Ableitelement 15 ist in dem Rohrelement 12 angeordnet. Die Rotation des Reinigungsrotors 16 um die Drehachse D an der Filtereinheit 14 bewirkt mit dem Absaugen des Ableitelements 15 eine lokale Umkehr der Strömungsrichtung S des Flüssigkeitsstroms im Bereich des Reinigungsrotors 16, wodurch eine rückwärtige Durchströmung der der Filterfläche 26 von einer geringen Menge der Flüssigkeit und ein Abtransport der Partikel zur druckentlasteten Reinigung der Filtereinheit 14 ausgelöst werden.

Der Antrieb der Antriebseinheit 18 ist als elektrischer Motor 19 ausgebildet. Die Anordnung 20 weist ein Getriebe in Form eines Umlenkgetriebes 32 und eine Rotorwelle 34 zur Übertragung des durch den Motor 19 erzeugten Antriebsmoments auf den Reinigungsrotor 16 auf. Das Umlenkgetriebe 32 ist über eine Zwischenwelle 36, die als Teil der Rotorwelle 36 ausgebildet ist, mit der Rotorwelle 34 verbunden. Die Rotorwelle 34 ist in einer an der Filtereinheit 14 angeordneten Lagereinheit 38 drehbar gelagert. Die Lagereinheit 38 weist zwei Lagerelemente in Form von Wälzlagern 40 auf.

Die Blockiereinheit 17 ist zwischen einer den Reinigungsrotor 16 festlegenden Blockierstellung und einer den Reinigungsrotor 16 zur Rotation um die Drehachse D freigebenden Freigabestellung verstellbar. Die Blockiereinheit 17 ist an der das Umlenkgetriebe 32 mit der Rotorwelle 34 verbindenden Zwischenwelle 36 angeordnet und in Strömungsrichtung S des Flüssigkeitsstroms im Wesentlichen in der Flucht der Lagereinheit 38 der Rotorwelle 34 angeordnet, d.h. dass die Blockiereinheit 17 senkrecht zu der Strömungsrichtung S des Flüssigkeitsstroms und senkrecht zu der Drehachse D des Reinigungsrotors 16 einen Durchmesser D1 mit einem Verhältnis von 1,1:1 zu einem Durchmesser D2 der Lagereinheit 38 aufweist, sodass nur ein geringer Überstand durch einen Flanschabschnitt 45 der Blockiereinheit 17 gegeben ist.

Darüber hinaus ist die Blockiereinheit als hydraulisch betätigte Bremse in Form einer Lamellenbremse 17 ausgebildet (vgl. Fig. 1b). Die Lamellenbremse 17 ist in Richtung auf die Blockierstellung vorgespannt und weist hierzu vorgespannte Federelemente in Form von Federpaketen auf. Zur Verstellung von der Blockierstellung in die Freigabestellung werden die vorgespannten Federpakete der Lamellenbremse 17 durch einen hydraulisch erzeugten Druck gelöst. Hierzu weist die Vorrichtung 10 eine als Vorratsgefäß ausgebildete Druckeinheit zur Bereitstellung des hydraulischen Drucks auf. Das Vorratsgefäß41 ist außerhalb der Filtereinheit 14 und der Filterfläche 26 angeordnet.

Die Vorrichtung 10 weist ferner eine mit einem als Differenzdrucksensor 43 ausgebildeten Sensorelement verbundene Steuereinheit 42 zur Steuerung der Antriebseinheit 18 auf. Der Differenzdrucksensor 43 ist an Stutzen vor und hinter der Filtereinheit 14 angeordnet und steht mit der Steuereinheit 42 zur Weiterleitung der erfassten Druckdifferenz in Verbindung.

Im Betrieb der Vorrichtung 10 zur Filtration des Flüssigkeitsstroms wird der in dem Rohrelement 12 geführte Flüssigkeitsstrom mittels der in dem Rohrelement 12 angeordneten Filtereinheit 14 zum Trennen der Partikel von dem Flüssigkeitsstrom gefiltert. Der an der Filtereinheit 14 angeordnete Reinigungsrotor 16 wird mittels der in der Blockierstellung angeordneten als Lamellenbremse 17 ausgebildeten Blockiereinheit festgehalten. Sobald ein vorgegebener Grenzwert der mittels des Differenzdrucksensors 43 ermittelten Druckdifferenz erreicht ist, wird die Lamellenbremse 17 mittels der Steuereinheit 42 zum Einleiten einer Reinigungsphase von der Blockierstellung in die den Reinigungsrotor 16 freigebende Freigabestellung verstellt. Hierzu werden die in Richtung auf die Blockierstellung durch die Federpakete vorgespannten Lamellen 39 der Lamellenbremse 17 mit dem mittels des von dem Vorratsgefäß bereitgestellten ölhydraulischen Drucks gelöst. Gleichzeitig wird der Reinigungsrotor 16 mittels der Antriebseinheit 18 zur Entfernung der von dem Flüssigkeitsstrom getrennten Partikel rotiert. Mittels des Ableitelements 14 wird eine Absaugung, also eine lokale Umkehr der Strömungsrichtung S des Flüssigkeitsstroms im Bereich des Reinigungsrotors 16, und somit eine rückwärtige Durchströmung der Filterfläche 26 von einer geringen Menge der Flüssigkeit und der Abtransport der Partikel zur druckentlasteten Reinigung der Filtereinheit 14 bewirkt. Durch die Rotation des Reinigungsrotors 16 um die Drehachse D wird die Filterfläche 14 vollständig von dem Reinigungsrotor 16 abgedeckt. Die abtransportierten Partikel werden durch das Ableitelement 15 aus dem Rohrelement 12 herausgeleitet und von dem Flüssigkeitsstrom getrennt.

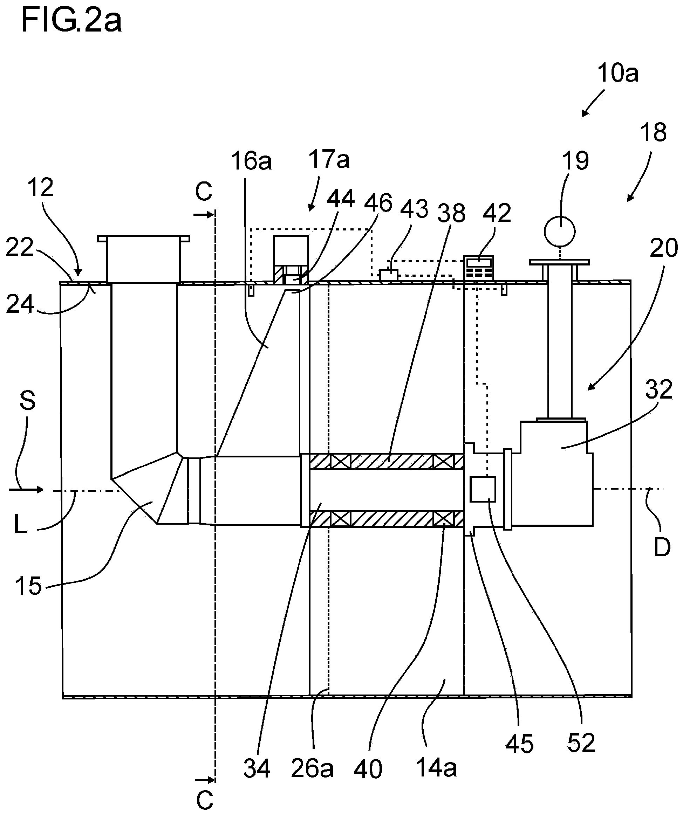

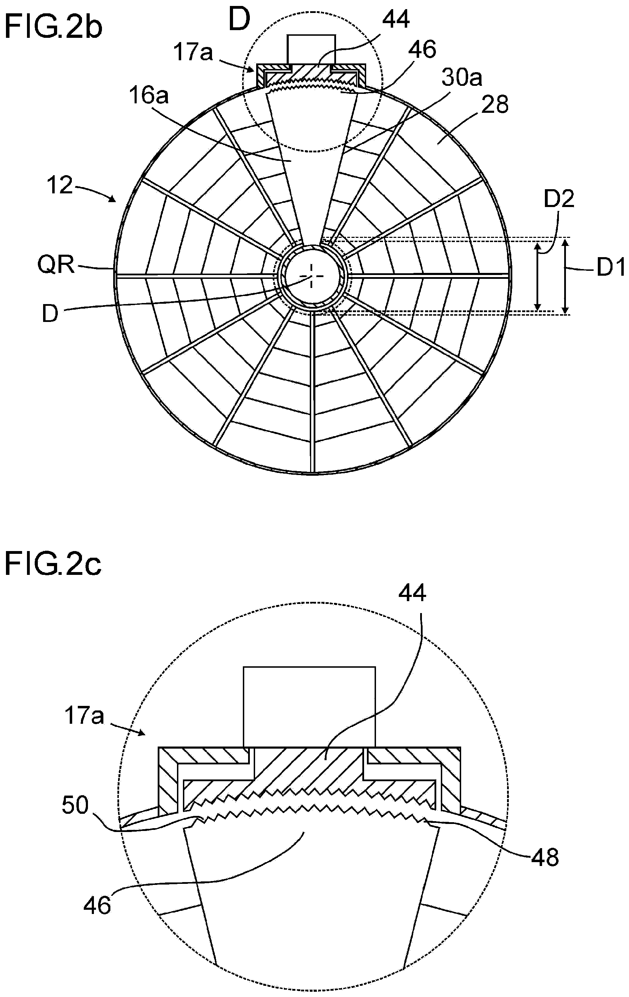

Für die in Fig. 2a dargestellte Vorrichtung 10a, die eine zweite Ausführungsform der Vorrichtung 10 darstellt, werden für gleiche Bauteile gleiche Bezugszeichen verwendet. Die Vorrichtung 10a unterscheidet sich von der Vorrichtung 10 gemäß Fig.1a durch eine Blockiereinheit 17a mit einem an dem Rohrelement 12 angeordneten Verstellelement 44 und einem an einem Reinigungsrotor 16a angeordneten Halteabschnitt 46 (s. Fig. 2b, 2c). Darüber weist die Vorrichtung 10a eine Filtereinheit 14a mit einer kreisförmigen Filterfläche 26a sowie den Reinigungsrotor 16a mit einer als Kreissektor ausgebildeten Kontur 30a auf.

Das Verstellelement 44 und der Halteabschnitt 46 weisen jeweils in der Blockierstellung miteinander in Eingriff stehende Formabschnitte in Form von alternierend angeordneten Erhebungen 48 und Vertiefungen 50 auf. Ferner ist das Verstellelement 44 zwischen einer der Freigabestellung zugeordneten Freigabeposition und einer der Blockierstellung zugeordneten Blockierposition verstellbar.

Die Vorrichtung 10a weist ferner ein als Positionssensor 52 ausgebildetes Sensorelement für die Winkelstellung des Reinigungsrotors 16a auf. Mittels des Positionssensors 52 wird die jeweils aktuelle Stellung des Reinigungsrotors 16a ermittelt und an die Steuereinheit 42 gemeldet.

Im Betrieb der Vorrichtung 10a wird der Flüssigkeitsstrom, wie vorstehend zur Vorrichtung 10 beschrieben, gefiltert. Der an der Filtereinheit 14a angeordnete Reinigungsrotor 16a wird mittels der in der Blockierstellung angeordneten Blockiereinheit 17a festgehalten. Hierbei ist das Verstellelement 44 in der Blockierposition angeordnet. Die Erhebungen 48 und die Vertiefungen 50 sind jeweils in Eingriff, sodass der Reinigungsrotor 16a und das Verstellelement 44 einen Formschluss in Umfangsrichtung zu der Drehachse D des Reinigungsrotors 16a bilden.

Zur Durchführung der Reinigung wird das Verstellelement 44 von der Blockierposition in die Freigabeposition verstellt und die Filtereinheit 14a wie vorstehend zur Vorrichtung 10 beschrieben durch den Reinigungsrotor 16a gesäubert.

Um den Reinigungsrotor 16a nach erfolgter Reinigung zu blockieren, wird dieser mittels der Antriebseinheit 18 unter Überwachung durch den Positionssensor 52 in eine Winkelstellung verfahren, in der der Halteabschnitt 46 dem Verstellelement 44 gegenüberliegt. Dann wird das Verstellelement 44 von der Freigabeposition in die Blockierposition verstellt und so mit dem Haltabschnitt 46 in Eingriff gebracht.

Mit der Blockiereinheit 17, 17a können kritische sowie ungeplante Ausfälle der Vorrichtung 10, 10a zur Filtration eines Flüssigkeitsstroms verhindert und somit planungsmäßige Wartungsintervalle der Vorrichtung 10, 10a verlängert werden.

Alle in Verbindung mit einzelnen Ausführungsformen der Erfindung erläuterten Merkmale können in unterschiedlicher Kombination für die Vorrichtung 10, 10a zur Filtration eines Flüssigkeitsstroms sowie das Verfahren zum Betrieb der Vorrichtung 10, 10a vorgesehen sein, um deren vorteilhafte Wirkungen zu realisieren, auch wenn diese zu unterschiedlichen Ausführungsformen beschrieben worden sind. Beispielsweise kann die Vorrichtung 10, 10a mehrere, z.B. zwei oder drei, Reinigungsrotoren 16, 16a aufweisen, die jeweils über eine Blockiereinheit 17, 17a festlegbar sind. Hierbei ist beispielsweise ein Reinigungsrotor 16 über eine an der Zwischenwelle 36 angeordnete Blockiereinheit 17 festlegbar und ein Reinigungsrotor 16a über eine an dem Rohrelement 12 angeordnete Blockiereinheit 17a festlegbar.

Der Schutzbereich der vorliegenden Erfindung ist durch die Ansprüche gegeben und wird durch die in der Beschreibung erläuterten oder in den Figuren gezeigten Merkmale nicht beschränkt.

### Bezugszeichenliste

- 10, 10a: Vorrichtung zur Filtration eines Flüssigkeitsstroms
- 12: Rohrelement
- 14, 14a: Filtereinheit
- 15: Ableitelement
- 16, 16a: Reinigungsrotor
- 17, 17a: Blockiereinheit/Lamellenbremse
- 18: Antriebseinheit
- 19: Antrieb
- 20: Anordnung
- 22: Rohrwand
- 24: Innenwand
- 26, 26a: Filterfläche
- 28: Filterelement
- 30, 30a: Kontur des Reinigungsrotors
- 32: Getriebe/ Umlenkgetriebe
- 34: Rotorwelle
- 36: Zwischenwelle
- 38: Lagereinheit
- 40: Lagerelement/Wälzlager
- 41: Vorratsgefäß
- 42: Steuereinheit
- 43: Sensorelement/Differenzdrucksensor
- 44: Verstellelement
- 45: Flanschabschnitt
- 46: Halteabschnitt
- 48: Erhebung
- 50: Vertiefung
- 52: Sensorelement/Positionssensor
- D: Drehachse
- D1: Durchmesser der Blockiereinheit
- D2: Durchmesser der Lagereinheit
- L: Längsachse des Rohrelements
- QR: Querschnitt des Rohrelements
- S: Strömungsrichtung des Flüssigkeitsstroms

## Patentansprüche

1. Vorrichtung zur Filtration eines Flüssigkeitsstroms, mit
- einem Rohrelement (12) zur Führung des Flüssigkeitsstroms,
- einer in dem Rohrelement (12) ortsfest angeordneten Filtereinheit (14, 14a) zum Filtern des Flüssigkeitsstroms,
- einem an der Filtereinheit (14, 14a) angeordneten und um eine in Strömungsrichtung (S) des Flüssigkeitsstroms angeordnete Drehachse (D) rotierbaren Reinigungsrotor (16, 16a),
- einer Antriebseinheit (18) mit einem hydraulischen oder elektrischen Antrieb (19) zur Erzeugung eines Antriebsmoments und einer Anordnung (20) zur Übertragung des Antriebsmoments auf den Reinigungsrotor (16, 16a), und
- einer in Kraftflussrichtung des Antriebsmoments in dem Rohrelement (12) angeordneten Blockiereinheit (17, 17a), die zwischen einer den Reinigungsrotor (16, 16a) festlegenden Blockierstellung und einer den Reinigungsrotor (16, 16a) zur Rotation um die Drehachse (D) freigebenden Freigabestellung verstellbar ist.

2. Vorrichtung nach Anspruch 1, **dadurch gekennzeichnet, dass** die Anordnung (20) ein Getriebe (32) und eine Rotorwelle (34) zur Übertragung des Antriebsmoments auf den Reinigungsrotor (16, 16a) aufweist, wobei die Blockiereinheit (17) in Kraftflussrichtung des Antriebsmoments nach dem Getriebe (32) angeordnet ist.

3. Vorrichtung nach Anspruch 2, **dadurch gekennzeichnet, dass** die Blockiereinheit (17) an der Rotorwelle (34) angeordnet ist.

4. Vorrichtung nach Anspruch 2 oder 3, **dadurch gekennzeichnet, dass** die Blockiereinheit (17, 17a) in Strömungsrichtung (S) des Flüssigkeitsstroms im Wesentlichen in der Flucht einer Lagereinheit (38) der Rotorwelle (34) angeordnet ist.

5. Vorrichtung nach einem der vorangehenden Ansprüche, **dadurch gekennzeichnet, dass** die Blockiereinheit (17, 17a) derart ausgebildet ist, dass der Reinigungsrotor (16, 16a) in der Blockierstellung formschlüssig und/oder reibschlüssig festgelegt wird.

6. Vorrichtung nach einem der vorangehenden Ansprüche, **dadurch gekennzeichnet, dass** die Blockiereinheit (17) intern in Richtung auf die Blockierstellung vorgespannt ist.

7. Vorrichtung nach einem der vorangehenden Ansprüche, **dadurch gekennzeichnet, dass** die Blockiereinheit (17a) ein an dem Rohrelement (12) angeordnetes Verstellelement (44) aufweist, das in der Blockierstellung mit einem an dem Reinigungsrotor (16, 16a) angeordneten Halteabschnitt (46) in Wirkverbindung steht.

8. Vorrichtung nach einem der vorangehenden Ansprüche, **dadurch gekennzeichnet, dass** die Blockiereinheit als hydraulisch betätigte Bremse (17) ausgebildet ist.

9. Vorrichtung nach Anspruch 8, **gekennzeichnet durch** eine Druckeinheit (41) zur Bereitstellung von hydraulischem Druck zur Verstellung der hydraulisch betätigten Bremse (17) zwischen der Blockierstellung und der Freigabestellung.

10. Vorrichtung nach Anspruch 9, **dadurch gekennzeichnet, dass** die Druckeinheit (41) außerhalb der Filtereinheit (14, 14a) angeordnet ist.

11. Vorrichtung nach einem der vorangehenden Ansprüche, **gekennzeichnet durch** eine mit mindestens einem Sensorelement (43) verbundene Steuereinheit (42) zur Steuerung der Antriebseinheit (18).

12. Verfahren zum Betrieb einer Vorrichtung zur Filtration eines Flüssigkeitsstroms, wobei
- ein in einem Rohrelement (12) geführter Flüssigkeitsstrom mittels einer in dem Rohrelement (12) angeordneten Filtereinheit (14, 14a) zum Trennen von Partikeln von dem Flüssigkeitsstrom gefiltert wird, wobei
- ein an der Filtereinheit (14, 14a) angeordneter und um eine in Strömungsrichtung (S) des Flüssigkeitsstroms angeordnete Drehachse (D) rotierbarer Reinigungsrotor (16, 16a) mittels einer in einer Blockierstellung und in Kraftflussrichtung eines Antriebsmoments des Reinigungsrotors (16, 16a) in dem Rohrelement (12) angeordneten Blockiereinheit (17, 17a) festgehalten wird, wobei
- die Blockiereinheit (17, 17a) zum Einleiten einer Reinigungsphase von der Blockierstellung in eine den Reinigungsrotor (16, 16a) freigebende Freigabestellung verstellt wird und
- der Reinigungsrotor (16, 16a) mittels einer einen hydraulischen oder elektrischen Antrieb (19) zur Erzeugung des Antriebsmoments und eine Anordnung (20) zur Übertragung des Antriebsmoments auf den Reinigungsrotor (16, 16a) aufweisenden Antriebseinheit (18) zur Entfernung der von dem Flüssigkeitsstrom getrennten Partikel rotiert wird.

13. Verfahren nach Anspruch 12, **dadurch gekennzeichnet, dass** die Reinigungsphase periodisch und/oder in Abhängigkeit eines vorgebbaren Grenzwerts und/oder für eine festgelegte Dauer und/oder nach einem festgelegten Zeitintervall gesteuert wird.

14. Verfahren nach Anspruch 12 oder 13, **dadurch gekennzeichnet, dass** als Grenzwert ein mittels mindestens eines vor und/oder nach der Filtereinheit (14, 14a) angeordneten Sensorelements (43) erfasster Druck des Flüssigkeitsstroms vorgegeben wird.

## Claims

1. Device for filtering a liquid stream, with
- a pipe element (12) for guiding the liquid stream,
- a filter unit (14, 14a) arranged in a fixed position in the pipe element (12) for filtering the liquid stream,
- a cleaning rotor (16, 16a) arranged at the filter unit (14, 14a) and rotatable about an axis of rotation (D) arranged in the flow direction (S) of the liquid stream,
- a drive unit (18) with a hydraulic or electric drive (19) for generating a driving torque and an arrangement (20) for transmitting the driving torque to the cleaning rotor (16, 16a), and
- a locking unit (17, 17a) which is arranged in the pipe element (12) in the direction of force flow of the driving torque and which is adjustable between a locking state fixing the cleaning rotor (16, 16a) and a release state releasing the cleaning rotor (16, 16a) for rotation about the axis of rotation (D).

2. The device according to claim 1, **characterized in that** the arrangement (20) has a gear (32) and a rotor shaft (34) for transmitting the driving torque to the cleaning rotor (16, 16a), the locking unit (17) being arranged downstream of the gear (32) in the direction of force flow of the driving torque.

3. The device according to claim 2, **characterized in that** the locking unit (17) is arranged at the rotor shaft (34).

4. The device according to claim 2 or 3, **characterized in that** the locking unit (17, 17a) is arranged in the flow direction (S) of the liquid stream essentially in the alignment of a bearing unit (38) of the rotor shaft (34).

5. The device according to one of the preceding claims, **characterized in that** the locking unit (17, 17a) is designed in such a way that the cleaning rotor (16, 16a) is positively and/or frictionally locked in the locking state.

6. The device according to one of the preceding claims, **characterized in that** the locking unit (17) is internally preloaded in the direction of the locking state.

7. The device according to one of the preceding claims, **characterized in that** the locking unit (17a) has an adjustment element (44) which is arranged at the pipe element (12) and which, in the locking state, is operatively connected to a holding section (46) arranged at the cleaning rotor (16, 16a).

8. The device according to one of the preceding claims, **characterized in that** the locking unit is designed as a hydraulically actuated brake (17).

9. The device according to claim 8, **characterized by** a pressure unit (41) for providing hydraulic pressure for adjusting the hydraulically actuated brake (17) between the locking state and the release state.

10. The device according to claim 9, **characterized in that** the pressure unit (41) is arranged outside the filter unit (14, 14a).

11. The device according to one of the preceding claims, **characterized by** a control unit (42) connected to at least one sensor element (43) for controlling the drive unit (18).

12. A method of operating a device for filtering a liquid stream, wherein
- a liquid stream guided in a pipe element (12) is filtered by means of a filter unit (14, 14a) arranged in the pipe element (12) for separating particles from the liquid stream, wherein
- a cleaning rotor (16, 16a) arranged at the filter unit (14, 14a) and rotatable about an axis of rotation (D) arranged in the flow direction (S) of the liquid stream is held by means of a locking unit (17, 17a) arranged in a locking state and in the direction of force flow of a driving torque of the cleaning rotor (16, 16a) in the pipe element (12), whereby
- the locking unit (17, 17a) is moved from the locking state to a release state releasing the cleaning rotor (16, 16a) to initiate a cleaning phase, and
- the cleaning rotor (16, 16a) is rotated by means of a drive unit (18) having a hydraulic or electric drive (19) for generating the driving torque and an arrangement (20) for transmitting the driving torque to the cleaning rotor (16, 16a) for removing the particles separated from the liquid stream.

13. The method according to claim 12, **characterized in that** the cleaning phase is controlled periodically and/or as a function of a predeterminable threshold value and/or for a specified duration and/or according to a specified time interval.

14. The method according to claim 12 or 13, **characterized in that** a pressure of the liquid stream detected by means of at least one sensor element (43) arranged upstream and/or downstream of the filter unit (14, 14a) is predetermined as the threshold value.

## Revendications

1. Dispositif destiné à filtrer un flux de liquide, comprenant
- un élément tubulaire (12) destiné à guider le flux de liquide,
- une unité de filtration (14, 14a) disposée de manière fixe dans l'élément tubulaire (12) pour filtrer le flux de liquide,
- un rotor de nettoyage (16, 16a) disposé au niveau de l'unité de filtration (14, 14a) et pouvant tourner autour d'un axe de rotation (D) orienté dans le sens d'écoulement (S) du flux de liquide,
- une unité d'entraînement (18) comprenant un entraînement hydraulique ou électrique (19) destiné à générer un couple d'entraînement et un dispositif (20) destiné à transmettre ce couple d'entraînement au rotor de nettoyage (16, 16a), et
- une unité de verrouillage (17, 17a) qui est disposée dans l'élément tubulaire (12) dans le sens de l'application de la force du couple d'entraînement et qui est réglable entre un état de verrouillage immobilisant le rotor de nettoyage (16, 16a) et un état de déverrouillage libérant le rotor de nettoyage (16, 16a) pour qu'il puisse tourner autour de l'axe de rotation (D).

2. Le dispositif selon la revendication 1, **caractérisé en ce que** le dispositif (20) comporte un engrenage (32) et un arbre de rotor (34) destinés à transmettre le couple d'entraînement au rotor de nettoyage (16, 16a), l'unité de verrouillage (17) étant disposée en aval de l'engrenage (32) dans le sens de transmission du couple d'entraînement.

3. Le dispositif selon la revendication 2, **caractérisé en ce que** l'unité de verrouillage (17) est disposée sur l'arbre de rotor (34).

4. Le dispositif selon la revendication 2 ou 3, **caractérisé en ce que** l'unité de verrouillage (17, 17a) est disposée dans le sens d'écoulement (S) du flux de liquide, sensiblement dans l'alignement d'une unité de palier (38) de l'arbre de rotor (34).

5. Le dispositif selon l'une des revendications précédentes, **caractérisé en ce que** l'unité de verrouillage (17, 17a) est conçue de telle sorte que le rotor de nettoyage (16, 16a) soit verrouillé par engagement positif et/ou par friction à l'état verrouillé.

6. Le dispositif selon l'une des revendications précédentes, **caractérisé en ce que** l'unité de verrouillage (17) est précontrainte en interne dans le sens de l'état de verrouillage.

7. Le dispositif selon l'une des revendications précédentes, **caractérisé en ce que** l'unité de verrouillage (17a) comporte un élément de réglage (44) qui est disposé au niveau de l'élément tubulaire (12) et qui, à l'état verrouillé, est relié de manière fonctionnelle à une section de retenue (46) disposée au niveau du rotor de nettoyage (16, 16a).

8. Le dispositif selon l'une des revendications précédentes, **caractérisé en ce que** l'unité de verrouillage est conçue comme un frein à commande hydraulique (17).

9. Le dispositif selon la revendication 8, **caractérisé par** une unité de pression (41) destinée à fournir une pression hydraulique pour régler le frein à commande hydraulique (17) entre l'état de verrouillage et l'état de déverrouillage.

10. Le dispositif selon la revendication 9, **caractérisé en ce que** l'unité de pression (41) est disposée à l'extérieur de l'unité de filtration (14, 14a).

11. Le dispositif selon l'une des revendications précédentes, **caractérisé par** une unité de commande (42) reliée à au moins un élément capteur (43) destiné à commander l'unité d'entraînement (18).

12. Procédé de mise en œuvre d'un dispositif destiné à filtrer un flux de liquide, dans lequel
- un flux de liquide acheminé dans un élément tubulaire (12) est filtré au moyen d'une unité de filtration (14, 14a) disposée dans l'élément tubulaire (12) afin de séparer les particules du flux de liquide, dans lequel
- un rotor de nettoyage (16, 16a), disposé au niveau de l'unité de filtration (14, 14a) et pouvant tourner autour d'un axe de rotation (D) orienté dans le sens d'écoulement (S) du flux de liquide est maintenu au moyen d'une unité de verrouillage (17, 17a) placée en position verrouillée et dans le sens de l'application d'un couple d'entraînement du rotor de nettoyage (16, 16a) dans l'élément tubulaire (12), de sorte que
- l'unité de verrouillage (17, 17a) est déplacée de l'état de verrouillage vers un état de déverrouillage libérant le rotor de nettoyage (16, 16a) afin de déclencher une phase de nettoyage, et
- le rotor de nettoyage (16, 16a) est mis en rotation au moyen d'une unité d'entraînement (18) comportant un entraînement hydraulique ou électrique (19) destiné à générer le couple d'entraînement et un dispositif (20) destiné à transmettre ce couple au rotor de nettoyage (16, 16a) afin d'évacuer les particules séparées du flux de liquide.

13. Le procédé selon la revendication 12, **caractérisé en ce que** la phase de nettoyage est commandée périodiquement et/ou en fonction d'une valeur seuil prédéterminable et/ou pendant une durée spécifiée et/ou selon un intervalle de temps spécifié.

14. Le procédé selon la revendication 12 ou 13, **caractérisé en ce qu'**une pression du flux de liquide détectée au moyen d'au moins un élément capteur (43) disposé en amont et/ou en aval de l'unité de filtration (14, 14a) est prédéfinie comme valeur seuil.
